# EUROPEAN PATENT APPLICATION

(11) **EP 1 016 813 A1**
(43) Date of publication of application: **05.07.2000**
(21) Application number: 99125358.4
(22) Date of filing: 20.12.1999
(51) Int. Cl.: F16K 24/04

(54) **An easy-assembled automatic air-relief valve**

(30) Priority: 28.12.1998 IT MI982840
(71) Applicant: Watts Intermes S.p.A., 39052 Caldaro (BZ) (IT)
(72) Inventor: Blasiol P.I., Arcangelo, 39057 Appiano (Bolzano) (IT)
(74) Representative: Zavattoni, Maria Chiara

(57) **Abstract**

An air-relief valve for hydraulic systems, particularly for water plants, thermal plants, sanitary plants, said valve being of a type comprising a float (31) inside a tank (20) and a lever pivoted on the float carrying a shutter which co-operates with a discharge orifice, has the lever (51) relatively elastic and the shutter (52) made with a peripheral groove so that the shutter-lever unit (50) can be assembled easily also by machine and applied to special uprights on the float.

The manufacturing costs of the valve are substantially reduced.

## Description

The invention refers to the field of air-relief valves for hydraulic systems, particularly for water plants or thermal plants or sanitary plants. These valves are generally mounted in the top parts of the system so as to enable automatic relief of gases, mainly air, that develop during normal use of the system itself The separation of air from the system, and hence the effectiveness of the de-aerator or air-relief valve, can be increased by installing the valve in a place where the pipe is wider, in that in this area the flow rate of the fluid is smaller.

Known in the art are automatic air-relief valves that comprise a body or tank, a float inside the body, a discharge orifice, or relief portion, which is generally placed in a lid or cover of the tank, and a shutter co-operating with said discharge orifice. The shutter is carried on a unit comprising a lever pivoted onto the float and to the lid, and a spring. The body or tank comprises a connecting part (e.g. a threaded connecting part) for connection to the hydraulic system and is generally made of metal. The lid comprising the discharge orifice is usually also made of metal and screwed on the body. The float is generally made of plastic material.

Valves of this type involve manufacturing various pieces by stamping or moulding operations and a number of manual assembly steps.

Consequently, in the field there is a continuous search for forms of valves that can be produced at more contained costs.

An aim of the invention is to obtain an ease of assembly and a reduction in the manufacturing costs of the air-relief valves of the type described above.

This aim has been achieved with a valve as claimed in Claim 1 and a process as claimed in Claim 9.

Further new and interesting characteristics of the invention are said in the dependant claims.

The new valve and the new process enable considerable simplification in the mounting or assembly of the valve, and consequently a reduction in production costs; the new valve is sound and works efficiently.

An examplary unrestrictive embodiment of an air-relief valve according to the present application will be described hereinbelow, with reference to the attached drawings in which:
Figure 1 is a cross-sectional view, taken on an axial vertical plane, of a valve according to the present invention, shown with the shutter thereof in a closed condition;
Figure 1a is a cross-sectional view similar to that of Fig. 1, but shows the valve in an open condition;

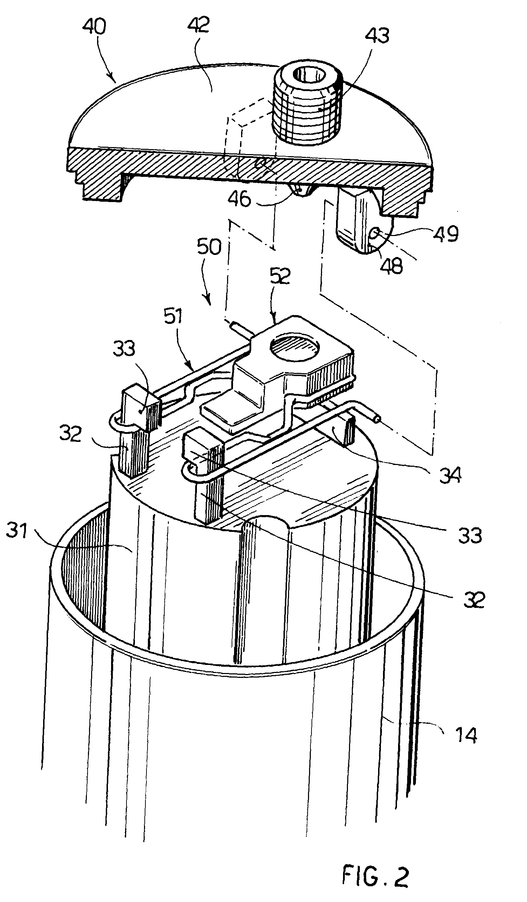

Figure 2 is an exploded, enlarged, interrupted perspective view which shows a lid of a valve according to the present invention, a valve lever-shutter unit, and part of the valve float; the lid is drawn in a broken-away view to show the underlying parts;
Figure 3 is an exploded perspective view of the shutter element and of the lever element before being assembled together;
Figure 4 shows a first step in assembling the lever and the shutter; the lever and shutter are drawn in plan view;
Figure 5 shows a second assembling step;
Figure 6 shows a final step, i.e., the shutter mounted on the lever, and the latter mounted on the tongues of the lid.

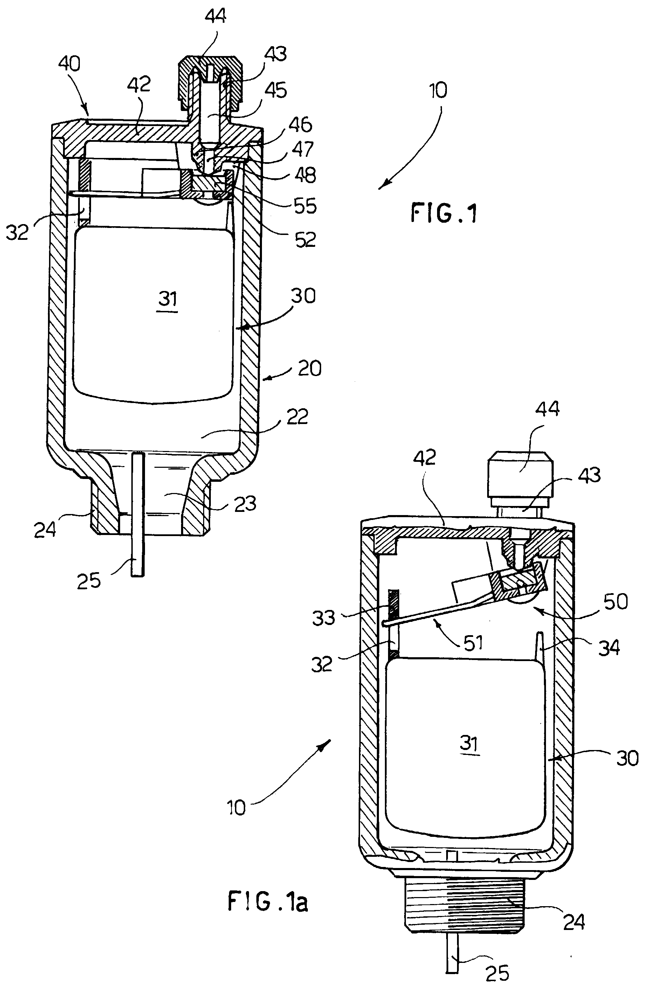

With reference first to Figure 1 and Figure 1a, an automatic air-relief valve is designated, as a whole, by the reference 10 and comprises a body or tank 20, a float 30, a lid 40, and a shutter-lever unit or actuator 50.

The body or tank 20 internally forms a chamber 22, which is in fluid communication with a hydraulic system through a passage 23 of a (e.g. threaded) connection or coupling 24. Possibly, the connection 24 may comprise a per-se known built-in flow-breaker 25, preferably arranged according to a non-diametral plane of the passage 23. If required, the latter allows mounting a non-return valve/shutoff valve on the same body.

The float 30 is housed in the chamber 22 so that it is free to move vertically according to the level of the fluid in said chamber. The float 30 comprises a float body 31, and on its top surface two uprights 32, each provided with a protruding tab or lug 33. In a position diametrically opposite to the uprights 32, the float has a projecting part 34. The float is generally made of plastic material with a specific weight lower than that of the fluid that circulates in the system.

The lid 40 comprises a plate part 42 from which a relief orifice portion or a vent portion 43 extends, which is typically threaded for engagement of a possible closing cap 44. The vent portion 43 comprises a through hole 45, at the bottom mouth of which a discharge element 46 with opening 47 is formed. On the bottom face - i.e., the one facing inwards - of the lid 40 and integral with the latter are fixed two hooking tongues 48 with engaging holes 49. The lid is fastened to the body in any suitable way. Preferably, both the body and the lid are made of plastic and are fixed together by ultrasonic welding.

The shutter-lever unit 50 comprises a lever 51 and a shutter 52.

The shutter (Figures from 3 to 6) comprises a shutter body 53 equipped with side grooves 54 and an end groove 54'.

The shutter further preferably comprises a top gasket 55.

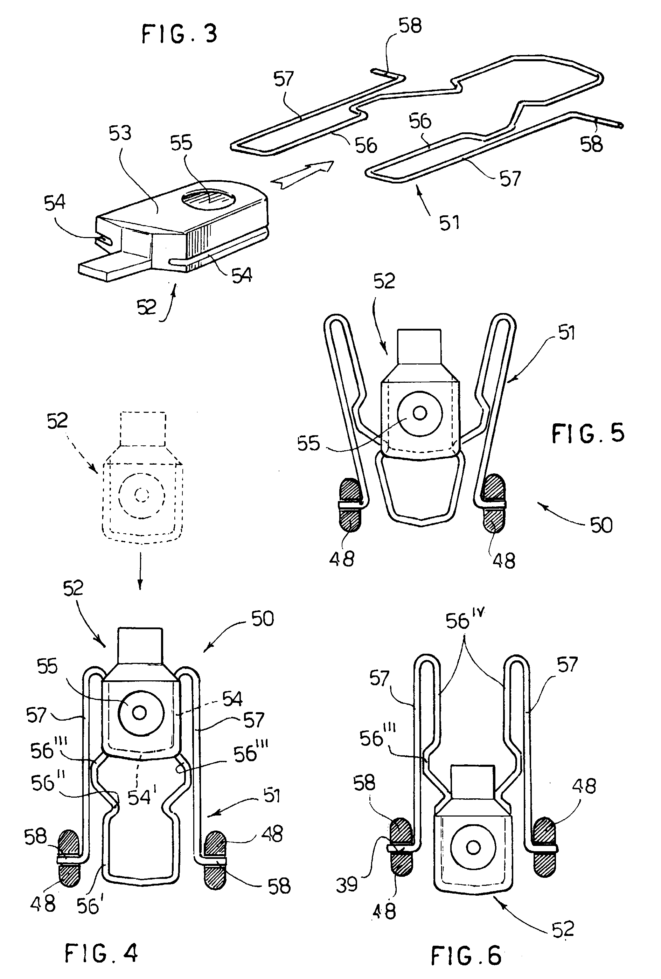

The lever 51 may be made of elastic steel wire or music wire and comprises a single bent wire portion which forms four branches defining a U-shape. In particular, the element 51 has a substantially symmetrical shape with respect to a median vertical plane, and each side comprises an inner branch 56 and an outer branch 57. The two inner branches 56, 56 are joined to form, in a proximal part thereof, a U-shaped housing 56', in which the shutter 52 is received (Fig. 6) and retained by engagement of the wire within the end and side grooves of the shutter. The branches 56 are further shaped with retaining portions 56^{II},divaricated portions 56^{III}, and parallel portions 56^{IV}.

The lever 51 could also be made of plastic material.

The outer branches 57 terminate with ends 58 bent outwards and aligned to one another to be received in the holes 49 of the tongues of the lid.

Each bend or loop formed between each inner branch and each outer branch is applied to a respective upright 32 of the float so that the lever element 51 remains engaged on the float, being retained by the lugs 33, so as to be able to oscillate about a horizontal axis.

The valve according to the invention may be assembled in a completely automatic way by a process comprising inserting the gasket 55 on the body 53 of the shutter 52; assembling the shutter 52 on the lever element 51 by means of mutual displacement on a horizontal plane, the operational steps being shown in Figures 4, 5 and 6. The shutter 52 engages first the distal portion 56^{IV} of the branches 56 (Fig. 4), then spreads apart the branches 56, 57, and is positioned in the proximal portion of the inner branches. The outer branches are preferably previously engaged with their ends 58 in the holes 49 of the tongues 48 so as to extend in said holes from inside towards outside, remaining freely rotating inside them. The shutter-lever unit 50 thus assembled is mounted on the uprights 32 of the float and remains engaged there. Finally, the lid 40 is mounted on the top edge of the tank, and the tank and the lid are fixed together, for example, by ultrasonic welding, or by gluing, or by screwing.

## Claims

1. An automatic air-relief valve comprising:
a body (20) and lid (40) assembly
a chamber (22) defined by said body and lid assembly
a connection (24) for connecting said chamber to a fluid system
a discharge orifice (47) for said chamber
a float (31) in said chamber
a lever-shutter unit (50) co-operating with the discharge orifice and the float to provide for opening and closing of the discharge orifice as a function of the position of the float
characterized in that
said lever-shutter unit comprises a lever made of elastic rod or wire and a shutter having a peripheral groove for engaging said elastic rod or wire.

2. A valve according to claim 1 characterized in that
the body-lid assembly comprises integral tongues (48) for anchoring the elastic rod or wire lever
said float (31) comprising at least an integral upright (32) for engaging the lever of the lever-shutter unit.

3. A valve according to claim 1 characterized in that
said shutter has a one-piece body (53), with said groove (54, 54') on part of the periphery thereof, and a gasket (55) brought by the body
the elastic rod or wire of the lever (51) has a U-shape in plan view, the bottom part of the U being placed in said groove around a portion of the peripheral surface of the shutter, said U comprising a bottom part and double arms each of them comprising an inner branch and an outer branch, the arm ends which are farthest from the bottom part receiving the shutter being engaged with said uprights of the float, the ends of the external branches towards the shutter body being turned outside and engaged within holes in said tongues (48) of the body-lid assembly.

4. A valve according to claim 2 wherein said body-lid assembly the body (20) is made of plastic material, the lid (40) is made of plastic material, and includes said tongues (48) and the lid is ultrasound welded to the body.

5. A valve according to claim 1, characterized in that said elastic wire or rod is one of the following: a metal wire, particularly a steel wire; or a plastic element.

6. A valve according to claim 1, characterized in that,in the said connection (24), a flow-breaker element (25) may be provided.

7. A valve according to claim 6 characterized in that the flow-breaker element (25) is set along a non-diametral plane of the connecting part.

8. A valve according to claim 3 characterized in that the inner branches (56) of the lever comprise a retaining portion (56^{II}) for retaining the shutter, and a spread apart portion (56^{III}).

9. An assembly process for assembling a valve according to Claim 1, characterized in that it comprises the step of assembling said shutter (52) and said lever (51) by mutual displacement according to a plane and introducing the shutter between the branches of the lever by elastic deformation thereof, in order to form the lever-shutter unit (50) by elastic clamping of the two parts together.

10. A process according to claim 9 for assembling a valve according to claim 3 characterized in that it comprises the following subsequent steps:
- engaging the ends (58) of the external branches of the lever in the tongues (48) of the body-lid assembly
- inserting the shutter body between the lever arms by elastically broadening the same up to the bottom of the U.

11. An assembly process for assembling a valve according to Claim 1, comprising a body and a plastic lid, characterized in that it comprises the step of fixing the body and lid together using one or more of the following techniques: ultrasonic welding, gluing, and screwing.
